# EUROPEAN PATENT APPLICATION

(11) **EP 4 697 642 A1**
(43) Date of publication of application: **18.02.2026**
(21) Application number: 24194263.0
(22) Date of filing: 13.08.2024
(51) Int. Cl.: H04L 9/08

(54) **SECURE DATA TRANSMISSION OVER CONSTRAINED ONE-WAY CHANNEL**

(71) Applicant: Nagravision Sàrl, 1033 Cheseaux-sur-Lausanne (CH)
(72) Inventor: VILLEGAS, Karine, 1033 Cheseaux-sur-Lausanne (CH); PRISI, Marcel, 1033 Cheseaux-sur-Lausanne (CH); SCHEID, Lancelot, 1033 Cheseaux-sur-Lausanne (CH)
(74) Representative: Novagraaf International SA

(57) **Abstract**

The sender stores a pair of sender's public and private keys and a public key of the receiver, and carries out the steps of:
A- generating a master key, that is a secret shared with the receiver, by key derivation from a current root key and using the sender's private key and the receiver's public key, and updating the root key with the generated master key;
B- generating, by key derivation from said master key, a chain of message keys for securing messages to communicate to the receiver;
C- generating a new pair of sender's public and private keys, sending the new sender's public key to the receiver and executing again the steps A and B using the new sender's private key and the same receiver's public key;
wherein the current root key used in the step A is
- at a first iteration of step A, an initial root key prestored in the sender, said initial root key being a secret shared with the receiver, and
- at each subsequent iteration of the step A, the root key that has been updated at the last iteration of step A.

## Description

### TECHNICAL FIELD

The present invention relates to secure communication technologies, particularly cryptographic protocols for secure data transmission over constrained one-way channels such as satellite communications.

### BACKGROUND

Secure communication technologies are essential for protecting data during transmission, particularly in environments where the risk of interception and unauthorized access is high. Satellite communications, which are often used for transmitting data from remote locations, are typically characterized by insecure transmission channels. This insecurity arises from several factors, including the open nature of satellite communication where signals can be intercepted by anyone with the appropriate receiving equipment.

Another contributing factor to the insecurity of satellite communications is the limited bandwidth available for transmission. This constraint not only affects the volume of data that can be sent but also limits the complexity of authentication and encryption methods that can be employed. Many traditional cryptographic protocols require a significant amount of data overhead to ensure security, which is not feasible in bandwidth-constrained satellite communications. As a result, these protocols cannot be directly applied to satellite links without compromising either the security or the efficiency of the transmission.

Embedded systems, such as sensors, Internet of Things (IoT) devices, and devices located in remote or harsh environments (e.g., farms, rural areas, etc.), often rely on satellite communications to transmit data. These systems may have limited computational and power resources, which further complicates the implementation of secure communication protocols. A challenge is to develop cryptographic solutions that are both lightweight and robust, capable of providing end-to-end security without exceeding the resource limitations of the devices involved.

Existing solutions in the prior art often fall short of addressing the unique combination of constraints presented by satellite communications. While some solutions may offer a degree of security, they tend to be too resource-intensive, whereas others that are lightweight enough for embedded systems do not provide adequate protection against security threats such as eavesdropping, tampering, and replay attacks.

Therefore, there is a need for a secure communication protocol specifically designed for constrained one-way channels, like satellite channels. Such a protocol must be efficient in terms of bandwidth and computational requirements, making it suitable for deployment in resource-constrained devices, while still ensuring the authenticity and confidentiality of the transmitted data.

An objective is to provide an end-to-end solution for sending encrypted and authenticated data in simple, low-power embedded systems over a satellite link or, more generally, over a constraint link.

### SUMMARY

The present disclosure concerns a method of unidirectional communication between a sender and a receiver, wherein the sender stores a pair of sender's public and private keys and a public key of the receiver, the method comprising the steps, carried out by the sender, of:
A- generating a master key, that is a secret shared by the sender and receiver, by key derivation from a current root key and using the sender's private key and the receiver's public key, and updating the root key with the generated master key;
B- generating, by key derivation from said master key, a chain of message keys for securing messages to communicate to the receiver;
C- generating a new pair of sender's public and private keys, sending the new sender's public key to the receiver and executing again the steps A and B using the new sender's private key and the same receiver's public key;
wherein the current root key used in the step A is
- at a first iteration of step A, an initial root key prestored in the sender, said initial root key being a secret shared with the receiver, and
- at each subsequent iteration of the step A, the root key that has been updated at the last iteration of step A.

By definition, "securing" a message (or data) refers to either the encryption and authentication of at least part of the message, or only the encryption of at least part of the message, or only authentication of at least part of the message.

The present disclosure also concerns:
- a device, or sender, comprising means for carrying out the steps of the above defined method;
- a computer program comprising instructions which, when the program is executed by a computer, cause the computer to carry out steps of this method;
- a computer-readable medium comprising instructions which, when executed by a computer, cause the computer to carry out the steps of this method.

The present disclosure also concerns a method of unidirectional communication between a sender and a receiver, wherein the receiver stores a pair of receiver's public and private keys and a sender's public key, the method comprising the steps, carried out by the receiver, of:
A- generating a master key, that is a secret key shared by the sender and receiver, by key derivation from a current root key and using the sender's public key and the receiver's private key, and updating the root key with the generated master key;
B- generating, by key derivation from said master key, a chain of message keys for validating a security applied on messages received from the sender;
C- receiving a new sender's public key from the sender, and executing again the steps A and B using the new sender's public key and the same receiver's private key;
wherein the current root key used in the step A is
- at the first iteration of step A, an initial root key prestored in the receiver, said initial root key being a secret shared with the sender, and
- at each subsequent iteration of the step A, the root key updated at the last iteration of step A.

By definition, validating the security of a message (or data) refers to the actions of either decrypting at least part of the message and verifying its authenticity, or only decrypting at least part of the message, or only verifying the authenticity of at least part of the message, depending on how the message is secured.

The present disclosure also concerns:
- a device, or receiver, comprising means for carrying out the steps of the above defined method;
- a computer program comprising instructions which, when the program is executed by a computer, cause the computer to carry out steps of this method;
- a computer-readable medium comprising instructions which, when executed by a computer, cause the computer to carry out the steps of this method.

Other features of the methods and devices will be described in the description that follows.

### BRIEF DESCRIPTION OF THE DRAWINGS

Other features, purposes and advantages of the disclosure will become more explicit by means of reading the detailed statement of the non-restrictive embodiments made with reference to the accompanying drawings.
FIG. 1 illustrates a flow chart diagram of the method of key management to enable unidirectional communication between a sender and a receiver, carried out by the sender, according to an embodiment.
FIG. 2 illustrates a flow chart diagram of the method of key management to enable unidirectional communication between a sender and a receiver, carried out by the receiver, according to an embodiment.
FIG. 3 illustrates the communication and message securitization process between Alice and Bob, according to an embodiment.
FIG. 4 illustrates the structure of a secured message including a network header, user data, and network footer.

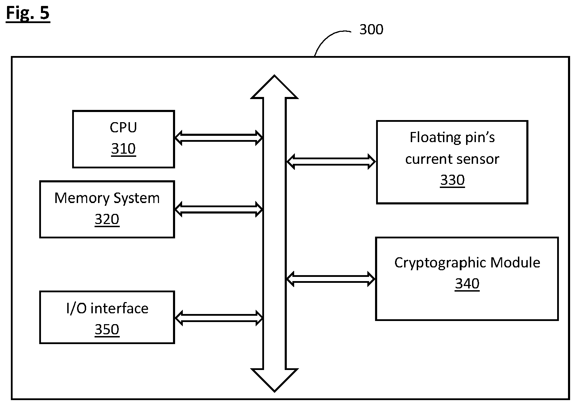

FIG. 5 is a block diagram of a sender device, according to an embodiment.

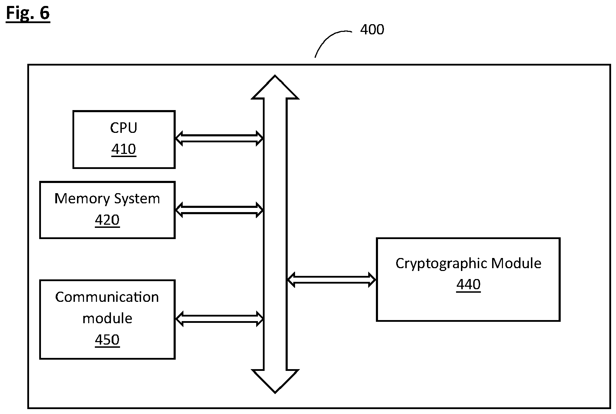

FIG. 6 is a block diagram of a receiver device, according to an embodiment.

### DETAILED DESCRIPTION

The following detailed description describes various features and functions of the disclosed systems and methods with reference to the accompanying figures. In the figures, similar symbols identify similar components, unless context dictates otherwise. The illustrative system, device and method embodiments described herein are not meant to be limiting. It may be readily understood by those skilled in the art that certain aspects of the disclosed systems, devices and methods can be arranged and combined in a wide variety of different configurations, all of which are contemplated herein.

The present disclosure concerns a method for secure data transmission over constrained one-way or unidirectional channels, such as those used in satellite communications. These channels are particularly used by embedded systems such as sensors (e.g., vehicle sensors) and/or in remote or harsh environments where traditional communication infrastructure is absent or impractical. Such channels have limitations including low bandwidth, high latency, and the potential for signal interception. These constraints necessitate a communication protocol that is not only secure but also efficient and adaptable to the limited resources of embedded systems.

Existing solutions in the field of secure communications for constrained one-way channels often fail to adequately address the set of challenges presented by such systems and/or environments. Traditional cryptographic protocols, while secure, tend to be too resource-intensive for practical application in embedded systems with limited computational power and energy resources. Furthermore, the protocols that are lightweight enough to operate within these constraints frequently do not provide sufficient protection against common security threats, including eavesdropping, tampering, and replay attacks. This leaves a significant gap in the ability to securely transmit data from remote locations, such as those relying on satellite communications.

The present disclosure concerns a method for securing data transmission over constrained one-way channels that overcomes the disadvantages of previous technologies. The method employes a lightweight double ratchet algorithm, which is an adaptation of the double ratchet mechanism known from secure messaging protocols, adapted for unidirectional communication scenarios. The present method is designed to be both efficient and secure, providing end-to-end encryption and/or authentication while being suitable for implementation in simple, low-power embedded systems. The method leverages a combination of cryptographic techniques, that my include a cryptographic key management system, an authenticated encryption algorithm with 128-bit security, and a hash function for cryptographic updates, to ensure the authenticity and/or confidentiality of data transmitted over satellite links or similar constrained channels.

Communications along a satellite path (e.g., sensor to satellite) for embedded systems require that cryptographic operations and protocol be as lightweight as possible (memory, execution time, power consumption, etc.).

The present disclosure provides a lightweight protocol that is protected from attacks, such as eavesdropping, tampering, replay, and physical attacks such as side channel and faults attacks that a device, such as a sensor, might be vulnerable to.

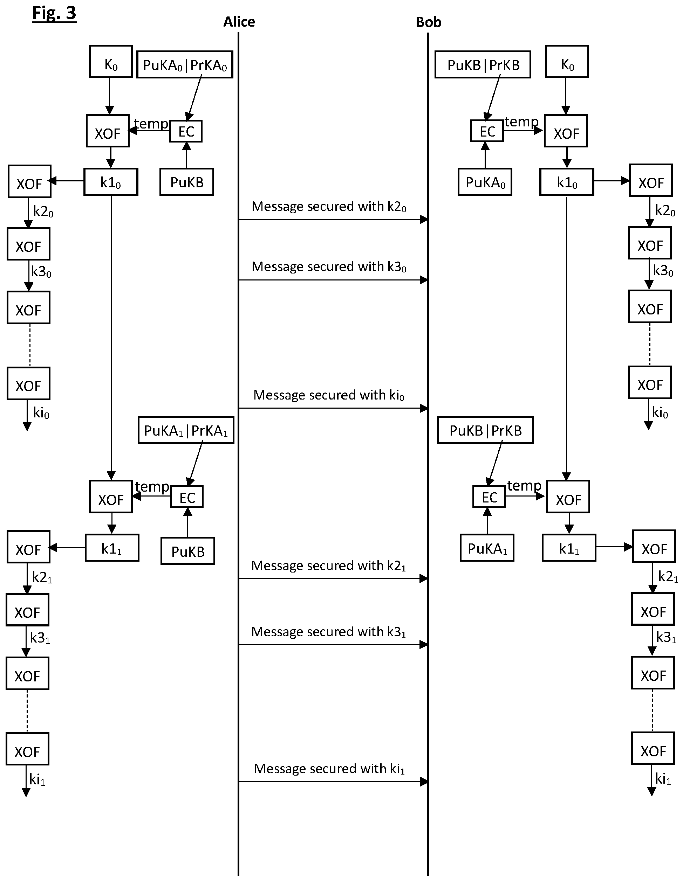

FIG. 3 illustrates a communication method between two entities including a sender 300, called Alice, and a receiver 400, called Bob. The method involves the provisioning of cryptographic elements onto the sender Alice 300 and the receiver Bob 400, and the generation of cryptographic elements for secure communication.

Alice 300 and Bob 400 each has a set of public and private cryptographic keys that is pre-stored in memory, respectively denoted as PuKA₀, PrKA₀ for Alice, and PuKB, PrKB for Bob 400. Alice 300 further stores in memory an initial root key K₀ and the public key PuKB of Bob 400. Bob 400 further stores in memory the same initial root key K₀ and the public key PuKA₀ of Alice 300. The key size for each of the keys PuKA₀, PrKA₀, PuKB, and PrKB is adapted to reach a targeted security level. For example, in case of a targeted 128-bit security, the private key could be of 256-bit size for prime field based elliptic curve.

The figure shows the use of a key derivation function, that can be based on a hash function such as an extendable output function (XOF), and elliptic curve cryptography (EC) to derive different series of cryptographic keys (k2ₙ, k3ₙ, ..., kiₙ with 0 ≤ *n*), used for securing messages. The messages are secured by Alice using cryptographic keys derived from her side and validated by Bob using corresponding cryptographic keys derived from his side.

By definition, a secured message is a message that is encrypted and authenticated, or only encrypted, or only authenticated. In an analogous manner, a secured message is validated by decrypting the message and verifying its authenticity, or by only decrypting the message, or by only verifying the message's authenticity, depending on how the message is secured.

Alice 300 begins the process with her pre-stored private key PrKA₀ and the pre-stored Bob's public key PuKB to generate a temporary secret, denoted "temp", through elliptic curve cryptography key agreement (EC). Then, Alice uses the pre-stored initial root key K₀ and employs the extendable output function (XOF) to derive a first master key k1₀ from the initial root key K₀ using the temporary secret temp as a derivation parameter. The first master key k1₀ is stored by Alice 300 in memory as a new root key (that replaces the initial root key K₀). Then, Alice uses the extendable output function (XOF) to generate a chain of message keys (k2₀, k3₀,... ki₀) from k1₀. These chained message keys are successively used to secure messages that Alice 300 sends to Bob 400 (i.e., to encrypt and authenticate messages, or to encrypt messages, or to authenticate messages). The message key can be updated, modified at each message to send to Bob 400, or every X messages with X>1.

On Bob's side, Bob 400 receives the secured messages from Alice and uses his pre-stored private cryptographic element PrKB and the pre-stored Alice's public cryptographic element PuKA₀ to perform a similar process. Bob applies elliptic curve cryptography (EC) to generate the same temporary secret temp that is a shared secret between Alice and Bob based on his private cryptographic element PrKB and Alice's public cryptographic element PuKA₀. Then, Bob 400 derives his cryptographic key sequence k1₀, k2₀, k3₀,... ki₀ which corresponds to Alice's cryptographic sequence by using the extendable output function (XOF) in a similar manner to Alice 300. Bob 400 updates the root key with the first master key k1₀ (that replaces the initial root key K₀) in memory, and uses the message keys k2₀, k3₀,... ki₀ to validate the secured messages received from Alice 300 (i.e., to decrypt and authenticate the messages, or to decrypt the messages, or the authenticate the messages).

The figure 3 also depicts the iterative nature of the process for generating a set of message keys. After the initial generation of a set of cryptographic keys k1₀, k2₀, k3₀,... ki₀, Alice 300 can generate a new set of public and private cryptographic keys, respectively denoted as PuKA₁, PrKA₁, and send her new public key PuKA₁ to Bob 400. Then, Alice 300 continues the process with her new private key PrKA₁ and the pre-stored Bob's public key PuKB to generate of a new temporary secret temp and a new set of cryptographic keys k1₁, k2₁, k3₁,... ki₁, and to secure a new set of messages with the new message keys k2₁, k3₁,... ki₁. Upon reception of new Alice's public key PuKA₁, Bob 400 continues the process with the new Alice's public key PuKA₁ and the pre-stored Bob's private key PrKB to generate the temporary secret temp and the new set of cryptographic keys k1₁, k2₁, k3₁,... ki₁, on his side, and validate (i.e., decrypt and/or authenticate) the new set of secured messages from Alice 300 with the new message keys k2₁, k3₁,... ki₁.

The generation of a new set of Alice's public and private cryptographic keys, respectively denoted as PuKAₙ, PrKAₙ, with n≥1, can be performed based on a specific key pair generation strategy. Examples of such strategy include:
- pre-defined periodic generation, when a new Alice's key pair is generated at regular intervals,
- event-driven generation, when a new Alice's key pair is generated based on certain events, such as detection of an attack or a message key compromission,
- message-based generation, when a new Alice's key pair is generated every Y messages sent by Alice 300 to Bob 400, and/or
- key-based generation, when a new Alice's key pair is generated every Y' message keys generated by Alice 300.

Optionally, a secret key update schedule that defines when Alice 300 can update its key pair can be pre-established and shared between Alice 300 and Bob 400. For example, this predetermined key update schedule can include predetermined dates and times when Alice 300 can update the set of Alice's public and private cryptographic keys. It can be provisioned or pre-stored onto Alice's device 300 (i.e., in storage means of the sender 300) and onto Bob's device (i.e., in storage means of the receiver 400) before a first use of the devices, for example during manufacturing. This schedule anticipates the timing of all possible future key updates which includes the generation of a new set of Alice's public and private cryptographic keys and the transmission of Alice's public key from Alice to Bob. Consequently, after an update of Alice's public and private keys, Bob receives an authenticated message including the new Alice's public key, verifies the authentication tag within the received message and also verifies that the message's timestamp aligns with the pre-established key update schedule. If the message timestamp does not match the pre-established key update schedule, Bob rejects the message and does not update Alice's public key in its storage means. If the authentication tag is valid and the message timestamp matches the pre-established key update schedule, Bob extracts the new Alice's public key from the message and use it to update Alice's public key in its storage means.

In this way, an attacker who obtains the current message key must also have knowledge of the secret key update schedule to successfully deceive Bob. The advantage is that this secret key update schedule is never sent in a message from Alice to Bob, so even if the attacker get the current key, he cannot get the secret key update schedule with only eavesdrop ping communication between Alice and Bob. The attacker would need to physically compromise either Alice or Bob in order to get this secret key update schedule.

This iterative process allows for the continuous secure exchange of messages, with each new set of Alice's key pair PuKAₙ, PrKAₙ, with n≥1 providing fresh keys for subsequent communications. The extendable output function (XOF) plays a role in this process by enabling the derivation of multiple sets from a single set, thus facilitating the generation of a secure chain of keys for message securitization (i.e., encryption and/or authentication).

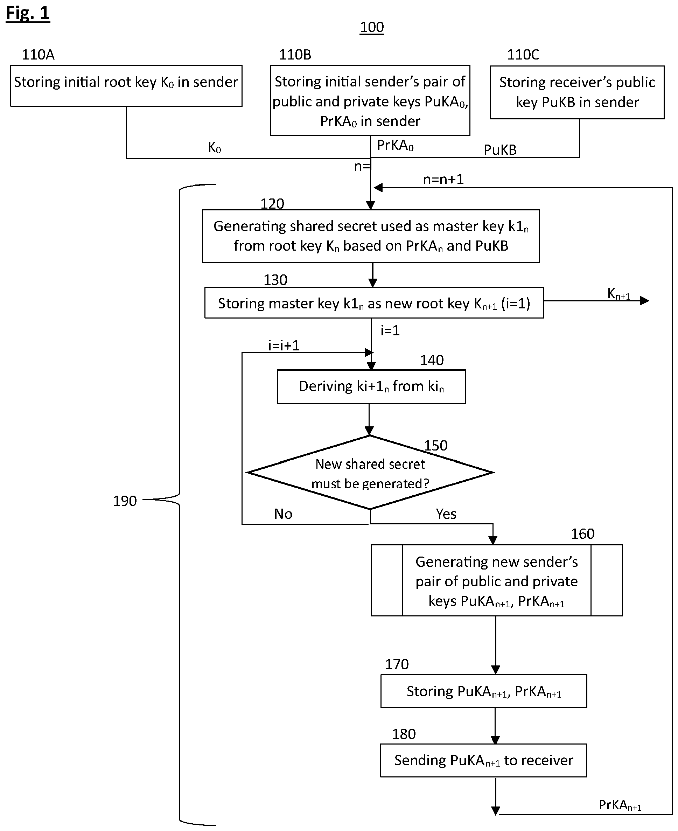

FIG. 1 shows a flowchart of a method 100 for secure unidirectional communication between the sender 300 and the receiver 400, carried out by the sender 300. The method 100 includes steps for pre-storing or provisioning cryptographic data onto the sender 300, generating shared secrets, deriving message keys for securing (i.e., encrypting and/or authenticating) messages to communicate to the receiver 400, updating sender's cryptographic data (namely, a pair of public and private keys), and sending to the receiver 400 the updated sender's public key. The method 100 can be implemented by devices with limited computational resources, such as those used in satellite communications.

At step 110A, the method 100 includes storing an initial root key K₀ in a sender's memory. This initial root key K₀ serves as a foundational secret shared with the receiver 400.

At step 110B, an initial pair of sender's public and private keys, PuKA₀ and PrKA₀, respectively, is stored in memory within the sender 300.

At step 110C, the method 100 includes storing in memory the receiver's public key PuKB within the sender 300, which will be used in conjunction with the sender's private key PrKAₙ with n≥0 to generate shared secrets.

The steps 110A-110C allow to provision or pre-store cryptographic data onto the sender 300 (i.e., in storage means of the sender 300) to secure the transmission of messages that follows. It can be performed before a first use of the sender 300, for example during manufacturing.

Then the method 100 comprises an iterative process 190 for generating a set or chain of message keys. This iterative process 190 includes steps 120-180 that will be described below. It is executed iteratively for the index n with n=0, 1, 2, ...., to generate successive sets or chains of message keys. Initially, at the first iteration of the process 190, the index n is equal to 0. The message keys successively generated are used to secure successive messages sent by the sender 300 to the receiver 400. The securitization can be authenticated encryption, or only encryption, or only authentication, advantageously with 128 bit-security. The type of securitization may depend on the data to protect. In an embodiment, it can use a cryptographic algorithm designed for authenticated encryption with associated data (AEAD), for example Grain128AEADv2 with 128 bit-security.

At step 120, the sender 300 generates a shared secret (i.e., a secret cryptographic data shared by the sender 300 and the receiver 400) from a current root key Kₙ, based on the sender's private key PrKAₙ and the pre-stored receiver's public key PuKB. The shared secret generated at step 120 is used as a master key k1ₙ. This shared secret is fundamental for establishing a secure communication channel between the sender 300 and the receiver 400.

At step 130, the sender 300 stores this master key k1ₙ as new root key Kₙ₊₁ for the subsequent iteration (of index n+1) of the process of message key generation 190, ensuring the continuity of the secure communication method.

At the first iteration of the process 190 (i.e., for n=0), the current root key used in step 120 is the initial root key K₀ prestored in memory. At each subsequent iteration of index n+1, the root key used in step 120 is the new root key Kₙ₊₁ generated and stored at the previous iteration of index n of the process 190, with n≥0.

The step 120 of generating the master key k1ₙ may include:
- a step of generating a temporary secret "temp" based on the current sender's private key PrKAₙ and the receiver's public key PuKB, both read from the sender's storage means, by using an elliptic curve, such as Curve25519, for example through the X25519 algorithm for generating shared secrets;
- a step of generating the master key k1ₙ from the current root key Kₙ using said temporary shared secret temp as a parameter.

The temporary secret "temp" is a generated using an algorithm for generating shared secrets, here for generating secrets shared by the sender 300 and the receiver 400.

In the step of generating the master key k1ₙ, the sender 300 can use a hash function such as a XOF for extendable Output Function, for example ASCON-XOF, that is applied on the current root key Kₙ, the temporary shared secret temp being used as a parameter in the cryptographic hash function. The master key k1ₙ can have a size of 256 bits. The XOF function can have 128-bit security.

The method includes an iterative step 140 for deriving, on the sender's side, a set or chain of message keys k2ₙ, k3ₙ, ... kiₙ from the current master key k1ₙ. These message keys k2ₙ, k3ₙ, ... kiₙ are for securing (i.e., encrypting and/or authenticating) messages to send to the receiver 400. At each iteration of the step 140, a key ki+1ₙ of the chain is derived from the previous key kiₙ, with i=1,2, ..., through the cryptographic hash function, here the XOF function (e.g., ASCON-XOF). The size of each message key kiₙ can be 128 bits or 256 bits.

The chained message keys k2ₙ, k3ₙ, ... have respective validity periods that are distinct from each other and follow one another. To send a message to the receiver 400 at a given time, the sender 300 secures (i.e., encrypts and/or authenticates) the message with the message key kiₙ that is valid at said given time and sends the secured message to the receiver 400. A key counter can be implemented on the sender 300 and incremented for example each time a new message key is generated. The current value of the key counter can be inserted in the secured message as associated data and sent to the receiver 400 for key synchronization, if needed.

At step 150, the method 100 determines whether a new shared secret must be generated which involves generating a new pair of sender's public and private keys PuKAₙ₊₁, PrKAₙ₊₁. The generation of a new set of sender's public and private cryptographic keys, PuKAₙ₊₁, PrKAₙ₊₁, with n≥0, can be performed based on a specific key pair generation strategy, as previously explained (for example, periodically and/or if a message key has been compromised).

In a negative event (No after step 150), the step 140 is executed again to generate the next message key from the previous message key.

In a positive event (Yes after step 150), at step 160, the method 100 generates a new pair of the sender's public and private keys, PuKAₙ₊₁, PrKAₙ₊₁.

The sender 300 comprises a microcontroller (e.g., Arduino Uno), and this step 160 may include:
- a step of generating a bit sequence with a predetermined bit entropy by measuring a plurality of values of an electrical current on a floating analog pin of this microcontroller, such as the A0 pin, at successive measurement times (e.g., with a measurement interval of 3 milliseconds);
- a step of generating the new private key PrKAₙ₊₁ for the sender 300 from the generated bit sequence.

In the step of generating the bit sequence, the bits are generated based on Least Significant Bit, or LSB, differences between two successive measured digital values (in bit representations) of the electrical current. For example:
- if the LSBs of two successive values of the measured current differ from each other, a bit of the bit sequence is extracted or generated and is equal to 1 if the first of the two LSBs is 1 and to 0 if the first of the two LSBs is 0;
- if the LSBs of two successive values of the measured current do not differ from each other, no bit is extracted.

This new private key PrKAₙ₊₁ can be generated from this bit sequence through the XOF function. The private key PrKAₙ₊₁ can have a length of 256 bits and a predetermined bit entropy of 256-bit (i.e., a 256-bit entropy). For example, the bit entropy of the generated bit sequence can approximately be equal to 0.25 per bit extracted, based on an evaluation with NIST (National Institute of Standards and Technology) tests. In that case, at least 1024 bits must be extracted from the current measurements (i.e., the bit sequence must include 1024 bits) to obtain a 256-bit entropy for the private key PrKAₙ₊₁.

After generation of its new private key PrKAₙ₊₁, the sender 300 generates an associated public key PuKAₙ₊₁, using an elliptic curve (EC), such as Curve25519, in a known manner for the skilled person.

At step 170, the sender 300 updates its pair of public and private keys and stores the newly generated public and private keys PuKAₙ₊₁ and PrKAₙ₊₁ in memory, preparing for the next iteration of the process 190.

At step 180, the method 100 concludes the current process 190 with the sender 300 sending the new public key PuKAₙ₊₁ to the receiver 400, enabling the receiver 400 to synchronize with the sender's updated cryptographic state and maintain secure communication.

As previously explained, in a particular embodiment, the update of the sender's pair of public and private keys may be performed in accordance with a predetermined key update schedule (i.e., at a predetermined date and time), this schedule being is a secret shared between the sender 300 and receiver 400 and pre-stored in the sender's storage means and in the receiver's storage means.

Then, the sender 300 executes again the process 190 including the steps 120-180 for the next index n+1.

It should be noted that at each iteration of the process 190, the sender 300 uses a new pair of sender's public and private keys and the same public key of the receiver 400. The public key of the receiver 400 is the same through the different iterations of the process 190, which facilitates key management. In some circumstances, for example in case the receiver's private key has leaked, it could be desired to re-secure the global system. For that purpose, the receiver's private and public keys could be re-generated, updated and stored in the receiver's storage means for example by performing a local update operation directly on the receiver device in a secured manner. In that case, the updated receiver's public key should be provisioned onto the sender 300 (i.e., stored in the sender's storage means) typically to update the stored receiver's public key.

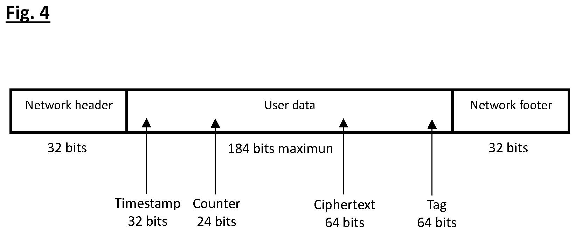

FIG. 4 illustrates the structure of a secured message (i.e., encrypted and/or authenticated message) sent by the sender 300 to the receiver 400, according to an exemplary embodiment. The secured message may comprise three main components: a network header, user data (or payload data), and a network footer. Each component is allocated a specific bit length within the overall message structure, ensuring that the message conforms to predefined requirements for secure transmission over constrained one-way channels.

In this embodiment, the network header occupies the first 32 bits of the message. This header may contain information necessary for the network to process the message correctly, such as routing or protocol version information. Following the network header is the user data section (or payload data section), which has a maximum size of 184 bits. The user data encapsulates the actual payload of the message, which is the information the sender 300 intends to securely transmit to the receiver 400.

Within the user data section, there are further subdivisions to enhance the security and authenticity of the message in the present illustrative example. For example, a 32-bit timestamp can be included to guarantee the freshness of the message, preventing replay attacks where old messages are resent as if they were new. Adjacent to the timestamp is a 24-bit counter, which serves to maintain synchronization between the sender's and receiver's cryptographic states, ensuring that both parties are using the correct cryptographic keys for encryption and decryption processes. Depending on the network constraints, the bit lengths of the different message sections could be adapted.

The main body of the user data is the ciphertext, which is here allocated 64 bits. The ciphertext represents the encrypted form of the original plaintext message. The encryption process uses the current message key kiₙ derived from the process 190, as described in the detailed description of the present disclosure. The final 64 bits of the user data are dedicated to a cryptographic tag. This tag is a component for authenticated encryption, providing a check value that the receiver 400 can use to verify the integrity and authenticity of the message upon decryption. If confidentiality of the message is not important, the message could be in clear in the main body of the user data with the tag only to guarantee authentication. Alternatively, if authenticity of the message is not important, the main body of the message could include the encrypted message and could be allocated 128 bits.

The message concludes with a network footer, which mirrors the network header in size with an allocation of 32 bits. The network footer may contain additional information required by the network for message handling, such as error checking or end-of-message indicators.

However, the structure of the secured message shown in figure 4 is only illustrative and non-limitative. The size and the order of the different sections could be different. Different sections or subdivisions of the message could also be implemented.

The structure of the secured message as shown in FIG. 4 is designed to optimize the use of the limited bandwidth available in satellite communications while providing robust security features. The inclusion of timestamps and counters within the user data ensures both the freshness of the message and synchronization of cryptographic elements, which are crucial for maintaining secure communication over the constrained one-way channel.

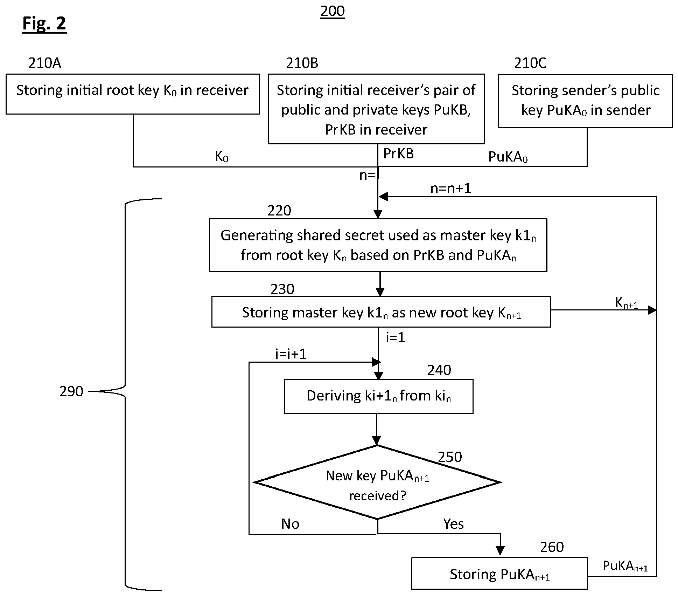

FIG. 2 illustrates a method 200 for unidirectional communication between the sender 300 and the receiver 400, as carried out by the receiver 400. The method includes a series of steps that ensure secure communication by employing cryptographic keys and an iterative process 290 for generating and updating these keys.

The receiver 400 begins by storing an initial root K₀ in the receiver's memory, as indicated by step 210A. This root K₀ is a foundational secret shared with the sender 300 and is used for the subsequent cryptographic processes.

The receiver 400 stores an initial pair of the receiver's public and private cryptographic keys, PuKB and PrKB, respectively, as shown in step 210B. These cryptographic keys are used in the cryptographic operations to generate shared secrets and derive message cryptographic keys.

Additionally, the receiver 400 stores the initial sender's public PuKA₀ in receiver's storage means or memory, as depicted in step 210C. This initial public PuKA₀ is used by the receiver 400 to generate shared secrets with the sender 300.

The steps 210A-210C allow to provision or pre-store cryptographic data onto the receiver 400 (i.e., in storage means of the receiver 400) to secure the data communication between the sender 300 and the receiver 400. It can be performed before a first use of the receiver 400, for example during manufacturing.

Then, the method 200 comprises an iterative process 290 for generating a set or chain of message keys. This iterative process 290 includes steps 220-260 that will be described below. It is executed iteratively for the index n with n=0, 1, 2, ...., to generate successive sets or chains of message keys k2n, k3n, ... kin, in parallel to the generation of the successive sets or chains of message keys k2n, k3n, ... kin, on the sender's side and in a similar manner to the sender 300. Initially, at the first iteration of the process 290, the index n is equal to 0. The message keys successively generated on the receiver's side are used to validate successive messages received from the sender 300 (i.e., decrypt the messages and/or verify their authenticity). In a particular embodiment, the validation can use a cryptographic algorithm designed for authenticated decryption, for example Grain128AEADv2 with 128 bit-security. It is adapted to the symmetric algorithm used by the sender 300.

At step 220, the receiver 400 generates a shared secret used as a primary or master key k1ₙ from the current root encryption Kₙ, based on the receiver's private key PrKB and the current sender's public key PuKAₙ to generate a set of message keys k2ₙ, k3ₙ, ... as described later. This shared secret establishes a secure communication channel between the receiver 400 and the sender 300.

The step 220 is similar to the step 120 and only differs from it by the fact that the receiver 400 generates the temporary secret "temp", shared with the sender 300, based on the current sender's public key PrKAₙ and the receiver's private key PrKB, both read from the receiver's storage means.

Following the generation of k1ₙ shared with the sender 300, the receiver 400 stores k1ₙ as a new root key Kₙ₊₁ for subsequent cryptographic operations, as indicated by step 230.

The receiver 400 executes an iterative step 240 to generate a set or chain of message keys k2ₙ, k3ₙ, ... kiₙ from the current master key k1ₙ, that are identical to those generated on the sender's side. These message keys k2ₙ, k3ₙ, ... kiₙ are for validating the messages received from the receiver 400 (i.e., decrypting the messages and/or verifying their authenticity). Each key ki+1ₙ of the chain is derived from the previous key kiₙ, with i=1,2, ..., through the hash function, here the XOF function (e.g., ASCON-XOF). The size of each message key kiₙ can be 128 or 256 bits. The step 240 is similar to the step 140 performed on the sender's side.

The receiver 400 may include a key counter for key synchronization between the sender and the receiver. This key counter is incremented for example each time a new message key is generated. The current value of the receiver's key counter can be compared to the value of the sender's key counter inserted in the secured message received from the sender 300. If the two counter's values match, the message keys are synchronized. It there are not synchronized, the receiver 400 synchronizes its message keys with the sender 300 based on the respective values of both counters, for example by generating one or more new message keys. This situation may happen when one or more messages from the sender 300 are lost or delayed during transmission.

After generating a message key ki+1ₙ from the previous message key kiₙ with i≥1 at step 240, the receiver 400 checks whether a new sender's public key PuKAₙ₊₁ has been received, as indicated by step 250.

In a negative event, (i.e., if a new sender's public key has not been received), the process continues with the generation of the next message key ki+2ₙ at step 240.

In a positive event (i.e., if a new sender's public key PuKAₙ₊₁ has been received), the receiver 400 proceeds to store the new sender's public PuKAₙ₊₁ in the receiver's storage means, as shown in step 260, preparing for the next iteration of the process 290.

The new sender's public key PuKAₙ₊₁ can be received in a secured message (here authenticated) transmitted from the sender 300 to the receiver 400. In case the receiver 400 stores the pre-established key update schedule shared with the sender 300, the receiver 400 not only verifies the authenticity of the received message based on the authentication tag but also verifies that the timestamp within the message matches or aligns with this key update schedule. The sender's public key is updated with the new PuKAₙ₊₁ within the receiver 400 only if the message is successfully authenticated and its timestamp aligns with the key update schedule.

Then, the receiver 400 executes a new iteration of the process 290, including the steps 220-260 for the index n+1.

It should be noted that at each iteration of the process 290, the receiver 300 uses a new sender's public key PuKAₙ with n=0, 1, 2,... and the same receiver's pair of private and public keys PrKB, PuKB. The pair of private and public keys of the receiver 400 is the same through the different iterations of the process 290, while the public key PuKAₙ of the sender 300 is updated upon reception of a new sender's public key typically from the sender 300. However, as previously explained, a local updated performed directly on the receiver 400 could be performed, for example in case of receiver's key leakage, to update the sender's public and private keys PrKB, PuKB. After this update, the receiver's public key could be provisioned or stored in the sender 300 by any appropriate provisioning mechanism.

The method ensures that the receiver 400 is capable of securely validating messages (i.e., decrypting and/or authenticating messages) from the sender 300. This authenticated encryption standard provides a high level of security while being suitable for the constrained bandwidth and computational resources of the receiver 400.

The sender 300 is a computing device or system that may be implemented with hardware and software. It may include one or more processors or microcontrollers 310, storage means (memory system) 320, a sensor 330 for measuring electrical current on an analog pin, a cryptographic module 340 configured to perform cryptographic operations, actions and/or functions, a communication module 350 capable of sending data through a communication network or channels, such as satellite communication channels. The operations, function, and/or actions that the sender 300 is configured to carry out have been described in more detail in the description of the method 100.

The receiver 400 is a computing device or system that may be implemented with hardware and software. It may include one or more processors or microcontrollers 410, storage means (memory system) 420, a cryptographic module 440 configured to perform cryptographic operations, actions and/or functions, a communication module 450 capable of receiving data through a communication network or channels, such as satellite communication channels. The operations, function, and/or actions that the receiver 400 is configured to carry out have been described in more detail in the description of the method 200.

] FIG. 1-3 are simplified block diagrams representing the methods 100, 200 executed by the sender (Alice) 300 and the receiver (Bob) 400 according to an embodiment.

The operations of the methods 100, 200 previously presented are intended to be illustrative. These methods may include one or more operations, functions, or actions, as illustrated by one or more of blocks and arrows. Although the blocks may be illustrated in a sequential order, these blocks may in some instances be performed in parallel, and/or in a different order than those described herein. Also, the various blocks may be combined into fewer blocks, divided into additional blocks, and/or removed based upon the desired implementation.

In addition, for the methods 100, 200 and other processes and methods disclosed herein, the flowchart shows functionality and operation of one possible implementation of present embodiments. In this regard, each block may represent a module, a segment, a portion of a manufacturing or operation process, or a portion of program code, which includes one or more instructions executable by a processor for implementing specific logical functions or steps in the process. The program code may be stored on any type of computer readable medium, for example, such as a storage device including a disk or hard drive. The computer readable medium may include non-transitory computer readable medium, for example, such as computer-readable media that stores data for short periods of time like register memory, processor cache and Random Access Memory (RAM). The computer readable medium may also include non-transitory media, such as secondary or persistent long term storage, like read only memory (ROM), optical or magnetic disks, compact-disc read only memory (CD-ROM), for example. The computer readable media may also be any other volatile or non-volatile storage systems. The computer readable medium may be considered a computer readable storage medium, for example, or a tangible storage device.

In addition, for the methods 100, 200 and other processes and methods disclosed herein, each block may represent circuitry that is wired to perform the specific logical functions in the process, for example.

A primary objective of the present disclosure is to provide secure, encrypted and/or authenticated unidirectional communications, such as satellite communications, for regions without Internet connectivity. Furthermore, given that the sender 300 may be used in a remote, hard-to-reach location, it necessitates minimal maintenance. A critical security measure is to ensure that if a sender's message key is compromised, it can autonomously and efficiently generate a new sender's secret or private key. This capability prevents an attacker who obtains the secret at time *t* from using it at time *t* + x, where x > 0 exceeds the key's lifespan. To achieve this robust security, the present disclosure introduces a lightweight version of the Double Ratchet Algorithm that was first described in detail by Moxie Marlinspike and Trevor Perrin in their paper titled "The Double Ratchet Algorithm" dated 2016-11-20. The chosen cipher algorithm can be Grain128AEADv2, and the cryptographic hash function that is used to derive and/or update keys, in particular message keys, can be ASCON-XOF. Additionally, an algorithm for generating shared secrets like the X25519 algorithm can be used to generate a shared secret between the sender 300 (e.g., a ground-based device) and the receiver 400 (e.g., a satellite relay or end-user). The process of generating a new secret or private key on the sender's side can involve measuring the current on a floating pin at consecutive times. A bit sequence can be generated based on the digital values of the measured current. If the Least Significant Bit (LSB) differs between the two consecutive measurements of this current (represented in bits), and if the first bit is 1, the value taken is 1; otherwise, it is 0. The entropy generated by this method has been evaluated using tests from NIST, to determine the number of iterations and/or the length of the bit sequence required to obtain a secret with 256-bit entropy for example (i.e., the key size for X25519). The bit sequence, that is a secret generated by the sender 300, can then processed through XOF to have a size of 256 bits for the new secret or private key of the sender 300. This method ensures that an attacker must continuously compromise the device to maintain access, thereby enhancing the system's robustness against intermittent attacks. The sender 300 can for example include an Arduino Uno microcontroller board, facilitating secure connectivity through Kineis satellites. The message payload section can include 8 bytes of information. The messages can be authenticated and have a guaranteed freshness. For example, the sender 300 can easily send up to 20 messages a day, with 85% transmission success rate.

The algorithm specifications are selected to maximize security while maintaining performance (optimized key update frequency). Consequently, the prototype can provide excellent connectivity to any location on Earth, including certain indoor locations, with maximal security. This allows for the safe deployment of sensor in remote areas, ensuring secure communications.

### FINAL CONSIDERATIONS

Although an overview of the inventive subject matter has been described with reference to specific example embodiments, various modifications and changes may be made to these embodiments without departing from the broader spirit and scope of embodiments of the present invention. For example, various embodiments of features thereof may be mixed and matched or made optional by a person of ordinary skill in the art. Therefore, the Detailed Description is not to be taken in a limiting sense, and the scope of various embodiments is defined only by the appended claims, along with the full range of equivalents to which such claims are entitled.

## Claims

1. A method of unidirectional communication between a sender and a receiver, wherein the sender stores a pair of sender's public and private keys and a public key of the receiver, the method comprising the steps, carried out by the sender, of:
A- generating a master key, that is a secret shared by the sender and receiver, by key derivation from a current root key and using the sender's private key and the receiver's public key, and updating the root key with the generated master key;
B- generating, by key derivation from said master key, a chain of message keys for securing messages to communicate to the receiver;
C- generating a new pair of sender's public and private keys, sending the new sender's public key to the receiver and executing again the steps A and B using the new sender's private key and the same receiver's public key;
wherein the current root key used in the step A is
- at a first iteration of step A, an initial root key prestored in the sender, said initial root key being a secret shared with the receiver, and
- at each subsequent iteration of the step A, the root key that has been updated at the last iteration of step A.

2. A device comprising means for carrying out the steps of the method of claim 1.

3. A computer program comprising instructions which, when the program is executed by a computer, cause the computer to carry out steps of the method of claim 1.

4. A computer-readable medium comprising instructions which, when executed by a computer, cause the computer to carry out the steps of the method of claim 1.

5. A method of unidirectional communication between a sender and a receiver, wherein the receiver stores a pair of receiver's public and private keys and a sender's public key, the method comprising the steps, carried out by the receiver, of:
A'- generating a master key, that is a secret key shared by the sender and receiver, by key derivation from a current root key and using the sender's public key and the receiver's private key, and updating the root key with the generated master key;
B'- generating, by key derivation from said master key, a chain of message keys for validating a security applied on messages received from the sender;
C'- receiving a new sender's public key from the sender, and executing again the steps A' and B' using the new sender's public key and the same receiver's private key;
wherein the current root key used in the step A' is
- at the first iteration of step A', an initial root key prestored in the receiver, said initial root key being a secret shared with the sender, and
- at each subsequent iteration of the step A', the root key updated at the last iteration of step A'.

6. A device comprising means for carrying out the steps of the method of claim 1.

7. A computer program comprising instructions which, when the program is executed by a computer, cause the computer to carry out steps of the method of claim 5.

8. A computer-readable medium comprising instructions which, when executed by a computer, cause the computer to carry out the steps of the method of claim 5.
